# EUROPÄISCHE PATENTSCHRIFT

(11) **EP 0 917 935 B1**
(45) Veröffentlichungstag und Bekanntmachung des Hinweises auf die Patenterteilung: **16.09.2009**
(21) Anmeldenummer: 98121093.3
(22) Anmeldetag: 06.11.1998
(51) Int. Cl.: B27F 1/02, B27F 1/06, B27M 1/08, B27C 1/08

(54) **Vefahren zum Bearbeiten von Werkstücken aus Holz, Kunststoff und dergleichen auf einer Kehlmaschine**
Method for the machining of workpieces of wood, plastic or the like in a moulding machine
Procédé d'usinage de pièces en bois, plastique ou similaires dans une moulurière

(30) Priorität: 19.11.1997 DE 19751033
(43) Veröffentlichungstag der Anmeldung: 26.05.1999
(73) Patentinhaber: Michael Weinig Aktiengesellschaft, D-97941 Tauberbischofsheim (DE)
(72) Erfinder: Englert, Heinrich, 97922 Lauda-Königshofen (DE)
(74) Vertreter: Jackisch-Kohl, Anna-Katharina

(56) Entgegenhaltungen:
- EP-A- 0 218 001
- EP-A- 0 254 798
- EP-A- 0 410 173
- EP-A- 0 455 962
- AT-B- 263 335
- DE-A- 2 921 108
- DE-A- 3 303 162
- DE-A- 3 307 809
- DE-B- 1 128 630
- DE-C- 941 451
- GB-A- 2 125 728
- US-A- 2 645 256

## Beschreibung

Die Erfindung betrifft ein Verfahren zur Bearbeitung von Werkstücken aus Holz, Kunststoff und dergleichen auf einer Kehlmaschine nach dem Oberbegriff des Anspruches 1. Ein solches verfahren ist aus der EP 254 798-A bekannt.

Bei bekannten Kehlmaschinen werden die Werkstücke nacheinander verschiedenen Werkzeugen zugeführt, mit denen die Werkstücke an der Ober- und Unterseite geradegehobelt und an den in Transportrichtung sich erstreckenden Seiten längsprofiliert werden. Aus den bearbeiteten Werkstücken werden beispielsweise Fenster- oder Türrahmen zusammengesetzt. Aus diesem Grunde müssen die Werkstücke auch an ihren quer zur Transportrichtung liegenden Seiten bearbeitet werden. Hierzu werden die Werkstücke nach oder vor dem Durchgang durch die Kehlmaschine einer Fenstermaschine zugeführt, auf der mit weiteren Werkzeugen die entsprechende Querprofilierung vorgenommen wird. Die Verwendung zweier unterschiedlicher Maschinen für unterschiedliche Bearbeitungen ist teuer. Zudem wird erheblicher Stellplatz für beide Maschinen benötigt.

Es ist bekannt, wenigstens zwei benachbarte Enden von Werkstücken gleichzeitig zu bearbeiten (AT 263 335 B). Aus diesem Grunde sitzen auf einem Werkzeugträger zwei Fräser, die quer zur Zuführrichtung der zu bearbeitenden Werkstücke verstellt werden. Die Werkstücke werden in Achsrichtung zugefördert, über Anschläge positioniert und angehalten. Die Stirnseiten dieser Werkstücke werden durch Verfahren des Werkzeugträgers quer zur Zuführrichtung durch die Fräser bearbeitet.

Es ist auch eine Maschine zur Bearbeitung von Fügeteilen aus Holz, insbesondere von Kanteln für Blend- und Flügelrahmen von Fenstern, bekannt (EP-A-0 455 962). Die zur Bearbeitung eingesetzten Werkzeuge sind in einer Linie hintereinander angeordnet. Mit ersten Werkzeugen wird das Werkstück an seiner Stirnseite quer bearbeitet. Mit zweiten Werkzeugen erfolgt eine Längsprofilierung des Werkstückes. Zur Querbearbeitung des Werkstückes wird das Werkstück auf eine Vorschubeinheit aufgespannt, die längs der ersten Werkzeuge verfahren wird. Um eine Längsprofilierung dieses Werkstückes durchführen zu können, wird es von der Vorschubeinheit abgenommen, gedreht und in seiner Längsrichtung an folgenden zweiten Werkzeugen vorbeigeführt. Für die Längsprofilierung und die Querbearbeitung sind somit unterschiedliche Spindeln vorgesehen.

Bei einer bekannten Umfälzmaschine (EP-A-0 410 173) werden die Außenseiten von Holzrahmen, insbesondere von Fensterrahmen, profiliert. Die Umfälzmaschine hat senkrecht zur Rahmenauflageebene einsteuerbare Spannbacken, die einen der Rahmenquerschenkel erfassen und die längs der Führung parallel zum Vorschub beweglich sind.

Es ist ferner eine Maschine bekannt (DE 29 21 108 A), bei der zur Querbearbeitung des Werkstückes eine Zapfenschlagspindel auf einem Kreuzsupport quer zur Transportrichtung des Werkstückes bewegt wird. Hierbei bewegt sich der Kreuzsupport mit dem Werkstück mit Vorschubgeschwindigkeit mit. Die Zapfenschlagspindel mit dem entsprechenden Querbearbeitungswerkzeug bearbeitet nur die Stirnseite des Werkstückes. Die Längsprofilierung wird durch die nachfolgenden, in einer Reihe hintereinander auf den Spindeln sitzenden Werkzeuge vorgenommen.

Es ist eine Maschine zum vierseitigen Aushobeln, Zapfen und Schlitzen sowie Umfälzen von Fensterkanteln und -rahmen bekannt (EP-A-0 254 798). Die Quer- und Längsbearbeitung der Werkstücke erfolgt auf rechtwinklig zueinander angeordneten Bearbeitungseinheiten für die Quer- und die Längsbearbeitung. Um den Umfälzvorgang vornehmen zu können, werden die in Transportrichtung des Werkstückes linken Spindeln quer zur Transportrichtung hinter den rechten Anschlag gestellt.

Es ist schließlich eine Sondermaschine bekannt (DE 941 451 C), mit der im wesentlichen flächige Möbelteile, Tür- und Fensterrahmen bearbeitet werden. Die Werkstücke werden zunächst im Durchlauf längsbearbeitet und anschließend einem Werkstückträger übergeben, der seinerseits quer zur Längsrichtung verfahrbar ist.

Der Erfindung liegt die Aufgabe zugrunde, das gattungsgemäße Verfahren so auszubilden, dass mit der Kehlmaschine unterschiedlichste Bearbeitungen an den Werkstücken vorgenommen werden können.

Diese Aufgabe wird beim gattungsgemäßen Verfahren erfindungsgemäß mit den kennzeichnenden Merkmalen des Anspruches 1 gelöst.

Beim erfindungsgemäßen Verfahren lässt sich das Werkzeug und/oder das Werkstück quer zur Transportrichtung der Werkstücke durch die Kehlmaschine über einen großen Weg so verstellen, dass an den Werkstücken eine Querprofilierung möglich ist. Wird an den Werkstücken lediglich eine Längsprofilierung vorgenommen, bleibt das entsprechende Werkzeug in seiner Ausgangslage. Es wird dann lediglich hinsichtlich des Durchmessers des eingesetzten Werkzeuges bzw. der Breite des Werkstückes quer zur Transportrichtung eingestellt, um die entsprechende Längsprofilierung an den Werkstücken vornehmen zu können. Wird hingegen eine Querprofilierung beabsichtigt, wird das Werkzeug und/oder das Werkstück über zumindest einen Teil der Breite der querzuprofilierenden Seite des Werkstückes bewegt, wobei das rotierende Werkzeug am Werkstück die Querprofilierung vornimmt. Bei dem erfindungsgemäßen Verfahren wird die Längsprofilierspindel sowohl bei der Längsbearbeitung des Werkstückes als auch bei dessen stirnseitiger Querbearbeitung eingesetzt. Für die jeweilige Bearbeitung sitzt auf diese Spindel das entsprechende Werkzeug.

Weitere Merkmale der Erfindung ergeben sich aus den weiteren Ansprüchen, der Beschreibung und den Zeichnungen.

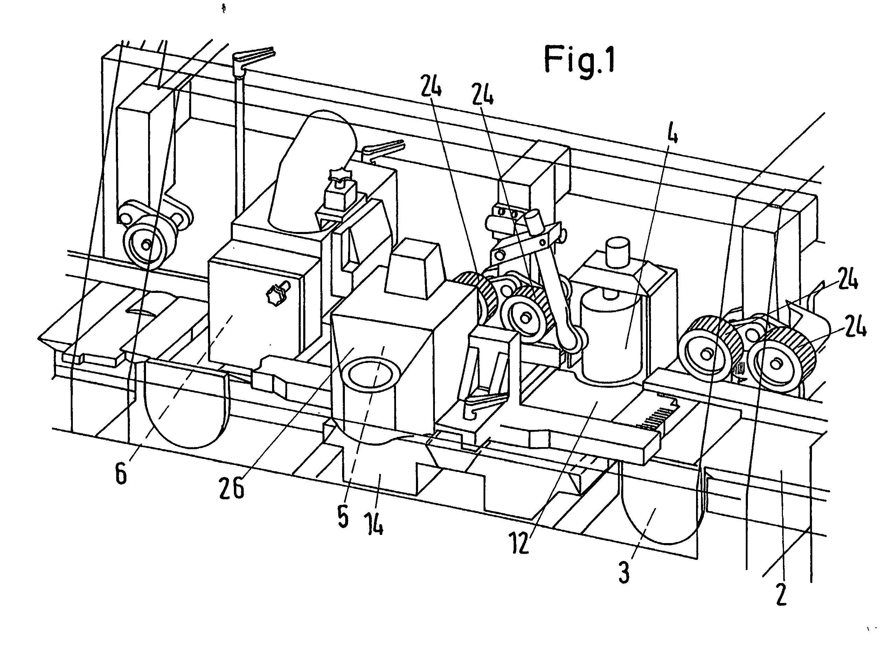

Die Erfindung wird anhand eines in den Zeichnungen dargestellten Ausführungsbeispieles näher erläutert. Es zeigen
- Fig. 1: in perspektivischer Darstellung eine Kehlmaschine zur Durchfüh- rung des Verfahrens,
- Fig. 2: in schematischer Darstellung in Draufsicht einen Teil der Kehl- maschine gemäß Fig. 1 während eines Längsprofilier- und Ge- radhobelvorganges,
- Fig. 3: in einer Darstellung entsprechend Fig. 2 die Kehlmaschine nach Fig. 1 während eines Querprofiliervorganges,
- Fig. 4 und Fig. 5: in Darstellung entsprechend Fig. 2 die Kehlmaschine nach Fig. 1 während eines Umfräsvorganges,
- Fig. 6: in einer Darstellung entsprechend Fig. 2 die Kehlmaschine nach Fig. 1 während eines Konturfräsvorganges,
- Fig. 7: in vergrößerter Darstellung und im Schnitt ein Konturwerkzeug, das mit einem auf einer Schablone vorgesehenen Werkstück in Eingriff ist.

Die Kehlmaschine dient zum Bearbeiten von Werkstücken 1 aus Holz, Kunststoff und dergleichen. Der grundsätzliche Aufbau der Kehlmaschine ist bekannt und wird darum nicht im einzelnen beschrieben. Die Kehlmaschine hat eine Transportbahn 2, auf der die zu bearbeitenden Werkstücke transportiert werden. Zum Transport der Werkstücke 1 sind in bekannter Weise Transportwalzen 24 vorgesehen, die auf den Werkstücken 1 aufliegen und drehbar angetrieben werden. Mit den Transportwalzen 24 werden die Werkstücke 1 in bekannter Weise Werkzeugen 3 bis 6 zugeführt, mit denen die Werkstücke 1 in noch zu beschreibender Weise bearbeitet werden.

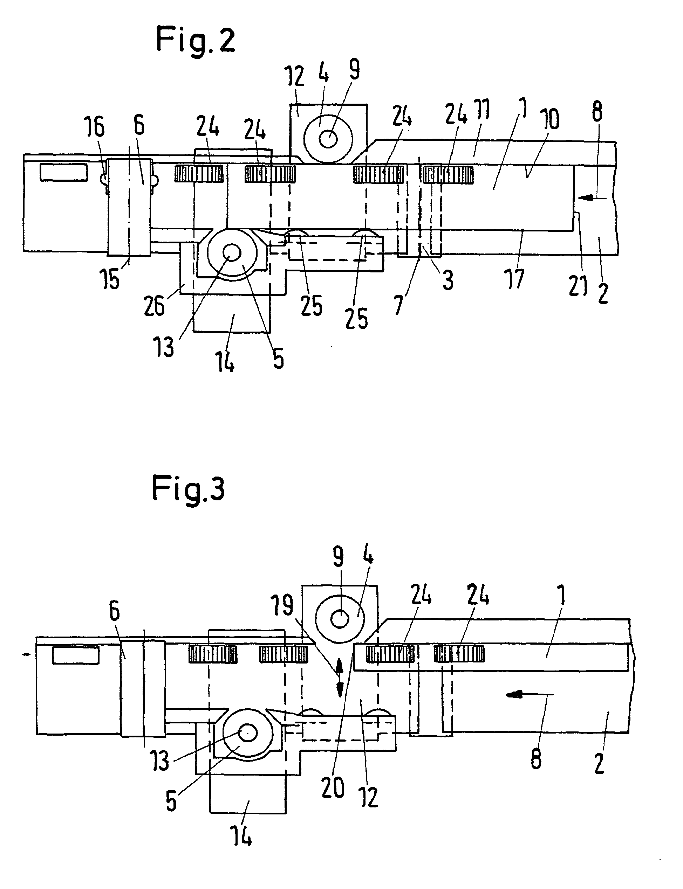

Das Werkzeug 3 befindet sich im Bereich unterhalb der Transportbahn 2 und sitzt auf einer horizontalen Spindel 7 (Fig. 2), die drehbar angetrieben ist. Mit dem Werkzeug 3 wird die Unterseite des Werkstückes 1 während seines Durchlaufes durch die Kehlmaschine bearbeitet. Die Transportbahn 2 ist im Bereich des Werkzeuges 3 unterbrochen, so daß seine Messer an die Unterseite des Werkstückes 1 gelangen können.

In Transportrichtung 8 der Werkstücke 1 ist mit Abstand hinter dem Werkzeug 3 das um eine vertikale Achse drehbare Werkzeug 4 angeordnet. Es befindet sich, in Transportrichtung 8 des Werkstückes 1 gesehen, auf der rechten Seite der Transportbahn 2. Mit dem Werkzeug 4, das auf einer vertikalen Spindel 9 drehfest sitzt, wird die in Transportrichtung 8 rechte Längsseite 10 des Werkstückes 1 bearbeitet. Damit die Werkstücke 1 während ihres Transportes durch die Kehlmaschine einwandfrei gegenüber den Werkzeugen 3 bis 6 ausgerichtet sind, liegen die Werkstücke während ihres Transportes mit ihrer Längsseite 10 an einem Anschlaglineal 11 an, das im Bereich des Werkzeuges 4 für dessen Durchtritt unterbrochen ist.

Das Werkzeug 4 sitzt auf einem Querschieber 12, der sich vorzugsweise senkrecht zur Transportrichtung 8 der Werkstücke 1 erstreckt. Mit dem Querschieber 12 kann das Werkzeug 4 quer, vorzugsweise senkrecht zur Transportrichtung 8 verschoben werden.

In Transportrichtung 8 hinter dem Werkzeug 4 befindet sich das Werkzeug 5, das sich auf der, in Transportrichtung 8 gesehen, linken Seite der zu bearbeitenden Werkstücke 1 befindet. Dieses Werkzeug 5 sitzt drehfest auf einer vertikalen Spindel 13. Das Werkzeug 5 ist zusammen mit der Spindel 13 auf einem weiteren Querschieber 14 gelagert, der quer, vorzugsweise senkrecht zur Transportrichtung 8 der Werkstücke 1 verschoben werden kann. Die beiden Querschieber 12, 14 liegen im dargestellten Ausführungsbeispiel unmittelbar nebeneinander. Sie können aber auch mit Abstand voneinander angeordnet sein. Die Oberseiten der Querschieber 12, 14 liegen vorteilhaft in einer Ebene mit der Oberseite der Transportbahn 2, so daß die Werkstücke 1 beim Übergang von der Transportbahn 2 auf die Querschieber 12, 14 störungsfrei gefördert werden können. Die Oberseiten der Querschieber 12, 14 können aber auch tiefer liegen. Dann bilden separate Tischplatten in diesem Bereich die Transportbahn 2.

In Transportrichtung 8 hinter dem Werkzeug 5 liegt das Werkzeug 6, das drehfest auf einer horizontalen Spindel 15 sitzt, die im Bereich oberhalb der Transportbahn 2 angeordnet ist. Mit dem Werkzeug 6 wird die Oberseite des Werkstückes 1 bearbeitet, beispielsweise geradegehobelt. Es können weitere Werkzeuge folgen, wie zum Beispiel weitere untere Spindeln.

Auf der Kehlmaschine lassen sich die unterschiedlichsten Bearbeitungen der Werkstücke in einfacher Weise durchführen. Sind die Werkzeuge 3 bis 6 entsprechend Fig. 2 eingestellt, dann werden die Werkstücke 1, die längs des in Transportrichtung 8 sich erstreckenden Anschlaglineales 11 transportiert werden, zunächst mit dem Werkzeug 3 an ihrer Unterseite geradgehobelt. Unmittelbar anschließend wird mit dem Werkzeug 4 die in Transportrichtung 8 rechts liegende Längsseite 10 geradegehobelt. Mit dem linken Werkzeug 5 wird die in Transportrichtung 8 linke Längsseite 17 des Werkstückes 1 geradegehobelt und damit die fertige Werkstückbreite bestimmt. Mit dem nachfolgenden Werkzeug 6 wird schließlich die Oberseite des Werkstückes 1 geradgehobelt und damit die Dicke des fertigen Werkstückes bestimmt.

Die Werkzeuge 4, 5, 6 können auch Profilwerkzeuge sein, d.h. sie tragen Profilmesser 16, wie dies beispielhaft für das obere Werkzeug 6 in Fig. 2 dargestellt ist. Die Profilmesser 16 haben die gewünschte Profilgebung. Damit werden die entsprechenden Seiten des Werkstückes 1 profiliert.

Nach dem Durchgang durch die Kehlmaschine sind die Werkstücke 1 an den genannten Seiten bearbeitet worden. Die Werkstücke 1 werden mit geringem Abstand hintereinander an den verschiedenen Werkzeugen 3 bis 6 vorbeigeführt, welche die entsprechenden Bearbeitungen an den Werkstücken vornehmen.

Die Kehlmaschine läßt sich einfach umstellen, so daß auf ihr beispielsweise eine Querprofilierung der Werkstücke 1 vorgenommen werden kann. Hierzu wird, wie aus Fig. 3 hervorgeht, der Querschieber 12 mit dem darauf sitzenden Werkzeug 4 und der zugehörigen Spindel 9 in Richtung des Doppelpfeiles 19 quer zur Transportrichtung 8 des Werkstückes verschoben. Das Werkstück 1 wird mit wenigstens einem (nicht dargestellten) Anschlag angehalten. Ein solcher Anschlag ist beispielsweise im Bereich der Transportwalzen 24 vorgesehen, der gesteuert nach unten gefahren wird und das Werkstück 1 in der zum Querprofilieren erforderlichen Lage positioniert. Das Werkstück 1 wird in dieser Lage von den Transportwalzen oder von (nicht dargestellten) Andruckelementen gehalten. Nunmehr wird gesteuert der Querschieber 12 quer zur Transportrichtung verfahren, wobei das rotierende Werkzeug 4 mit seinen Profilmessern die Stirnseite 20 des Werkstückes 1 profiliert. Auf diese Weise kann auf der Kehlmaschine eine Zapfen- und Schlitzbearbeitung am Werkstück 1 vorgenommen werden.

Nachdem die Querprofilierung des Werkstückes 1 beendet ist, wird der (nicht dargestellte) Anschlag zurückgefahren und damit das Werkstück 1 freigegeben. Es wird dann mittels der Transport- bzw. Vorschubwalzen 24 in Transportrichtung 8 weiter gefördert. Im Bereich des Werkzeuges 6 kann ein weiterer (nicht dargestellter) Anschlag vorgesehen sein, gegen den das Werkstück 1 aufläuft und am weiteren Transport gehindert wird. Dieser Anschlag ist so positioniert, daß die andere Stirnseite des Werkstückes 1 mit dem Werkzeug 4 durch Verschieben des Querschiebers 12 ebenfalls querprofiliert werden kann. Auf diese Weise wird bei jeder Bewegung des Querschiebers 12 eine Querprofilierung am Werkstück 1 vorgenommen. Der Verschiebeweg des Querschiebers 12 ist so groß, daß auch die breitesten, noch auf der Transportbahn 2 zu transportierenden Werkstücke 1 an ihren Stirnseiten querprofiliert werden können.

Der Anschlag kann auch so positioniert oder ein weiterer Anschlag so vorgesehen sein, daß die in Transportrichtung 8 rückwärtige Stirnseite 21 (Fig. 2) des Werkstückes 1 so liegt, daß diese Stirnseite 21 durch das Werkzeug 5 querprofiliert werden kann. In diesem Falle kann der Querschieber 14 quer zur Transportrichtung 8 zusammen mit dem auf ihm sitzenden Werkzeug 5 und der Spindel 13 verschoben werden.

Die in Transportrichtung 8 vordere Stirnseite 20 des Werkstückes 1 kann auch vom Werkzeug 5 querprofiliert werden. In diesem Fall ist der Anschlag entsprechend positioniert.

Es ist aber auch möglich, nach der Querprofilierung der Stirnseite 20 des Werkstückes 1 das Werkstück 1 zurückzufahren, das Werkstück 1 zu wenden und dann erneut in Transportrichtung 8 zu transportieren, bis es mit seiner Stirnseite 21 in der beschriebenen Weise am Anschlag anliegt und mit dem Werkzeug 4 querprofiliert werden kann.

Die Querschieber 12, 14 dienen bei der Kehlmaschine somit nicht nur dazu, die Werkzeuge 4, 5 auf unterschiedliche Durchmesser bzw. Werkstückbreiten einzustellen. Die Verstellwege der Querschieber 12, 14 sind entsprechend größer, um die Werkstücke 1 in der beschriebenen Weise querprofilieren zu können. Der maximale Verschiebeweg der Querschieber 12, 14 ist so groß, daß auch die breitesten, durch die Kehlmaschine zu transportierenden Werkstücke 1 an ihren Stirnseiten 20, 21 zuverlässig querprofiliert werden können.

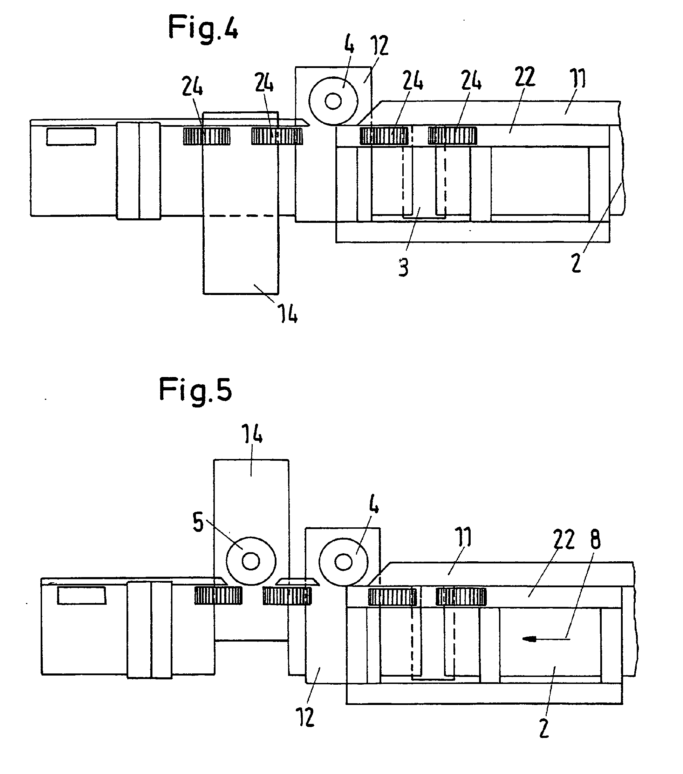

Die Kehlmaschine kann auch so umgestellt werden, daß mit ihr ein Umfräsen von Rahmen, wie Fensterrahmen, einfach möglich ist (Fig. 4). Das untere horizontale Werkzeug 3 wird abgesenkt, so daß es nicht am Rahmen 22 in Eingriff kommt. Das Werkzeug 5 mit den Andruckelementen 25 (Fig. 2) wird vom Querschieber 14 abgenommen. Somit kann der Rahmen 22 am Werkzeug 4 vorbeigeführt werden, wobei seine Profilmesser den Rahmen 22 an der Außenseite entsprechend profilieren. Der Umfräsvorgang ist an sich bekannt und wird darum nicht näher beschrieben. Der Rahmen 22 wird an sämtlichen Seiten außenseitig profiliert, wozu er in der erforderlichen Weise jeweils um 90° gedreht wird. Der Rahmen 22 selbst wird aus den zuvor längs- und querprofilierten Werkstücken 1 in bekannter Weise zusammengesetzt. Mit dem Querschieber 12 läßt sich das Werkzeug 4 optimal in bezug auf den Rahmen 22 einstellen, so daß er sauber umfräst wird. Der Rahmen 22 wird mit den Transportwalzen 24 in Transportrichtung 8 (Fig. 2) auf der Transportbahn 2 bewegt, wobei er am Anschlaglineal 11 anliegt.

Es ist für den Umfräsvorgang auch möglich, beide Werkzeuge 4 und 5 zu verwenden (Fig. 5). In diesem Fall wird der Querschieber 14 so weit quer zur Transportrichtung 8 verschoben, daß beide Werkzeuge 4, 5 nebeneinander liegen. Wird der Rahmen 22 an den beiden Werkzeugen 4, 5 vorbeitransportiert, bearbeiten sie die entsprechende Außenseite des Rahmens. Um Ausrisse am Ende der jeweils bearbeiteten Rahmenseite zu vermeiden, wird eines der beiden Werkzeuge 4,5 in bekannter Weise im Gleichlauf zur Transportrichtung 8 drehbar angetrieben.

Mit den Querschiebern 12, 14 können die Werkzeuge 4, 5 so weit verschoben werden, daß sie im wesentlichen hinter dem seitlichen Anschlaglineal 11, also außerhalb der Transportbahn 2 liegen. Der Rahmen 22 kann ein Fensterrahmen oder ein Türrahmen sein. Die den Werkzeugen zugeordneten (nicht dargestellten) Andruckelemente sorgen dafür, daß die Werkstücke 1 unmittelbar vor und hinter dem jeweiligen Werkzeug gegen die Transportbahn 2 gedrückt werden, so daß ein sauberer Durchlauf der Werkstücke 1 an den Werkzeugen 3 bis 6 gewährleistet ist. Wird das Werkzeug 5 abgenommen (Fig. 4), werden vorteilhaft auch die zugehörigen Andruckelemente 25 (Fig. 2) abgenommen. Sie sind an einer Absaughaube 26 vorgesehen, die zusammen mit den Andruckelementen 25 vorteilhaft als Einheit abnehmbar ist. Auf diese Weise ist der in Transportrichtung linke Bereich der Kehlmaschine frei, so daß die breiten Rahmen 22 für den Umfräsvorgang durch die Kehlmaschine transportiert werden können.

Es ist schließlich auch möglich, den Querschieber 12 so zu verschieben, daß das Werkzeug 4 in Transportrichtung 8 auf der linken Seite der Kehlmaschine neben dem Werkzeug 5 liegt.

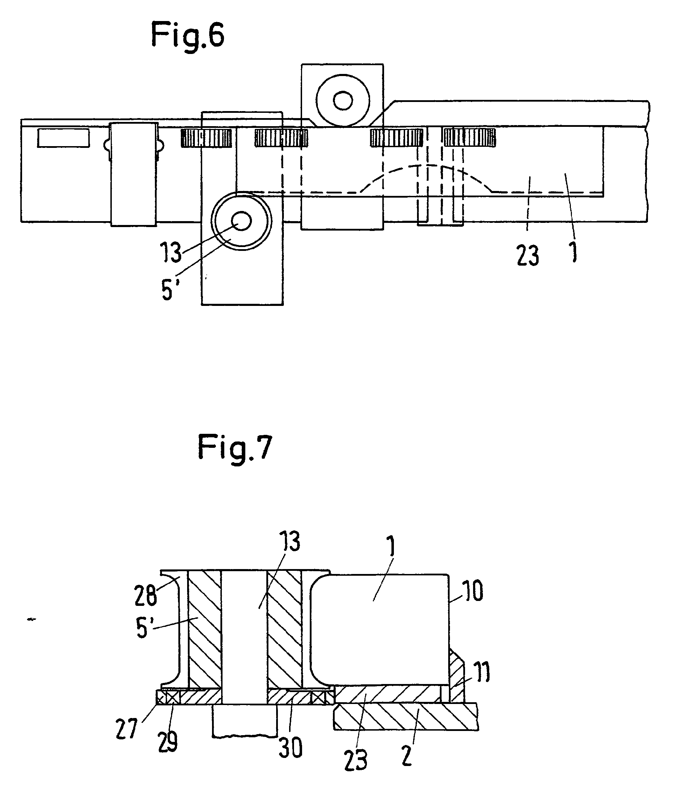

Die Fig. 6 und 7 zeigen schließlich die Möglichkeit, mit der Kehlmaschine ein Konturfräsen durchzuführen. Das Werkzeug 5' ist mit einem Anlaufring 27 versehen, der eine Schablone 23 abtastet, auf der das zu bearbeitende Werkstück 1 durch die Kehlmaschine gefördert wird. Der Anlaufring 27 sitzt unter Zwischenlage eines Lagers 29, vorzugsweise eines Wälzlagers, drehbar auf einer Scheibe 30 auf der Spindel 13 zusammen mit dem Werkzeug 5'. Die Schablone 23 ist mit der entsprechenden Kontur versehen, die in das Werkstück 1 gefräst werden soll. Der Anlaufring 27 tastet die Schablone 23 ab, wodurch dementsprechend eine Kontur in das Werkstück 1 gefräst wird. Das Werkzeug 5' sitzt drehfest auf der Spindel 13 und hat gerade oder profilierte Messer 28. Das Werkstück 1 mit der Schablone 23 wird mit den Transportwalzen 24 durch die Kehlmaschine transportiert. Die Schablone 23 liegt auf der Transportbahn 2 auf. Das Werkstück 1 liegt mit seiner einen Längsseite 10 am Anschlaglineal 11 an, das senkrecht von der Transportbahn 2 absteht. Die Schablone 23 hat, wie Fig. 7 zeigt, vorteilhaft geringen Abstand vom Anschlaglineal.

Die Schablone 23 kann auch auf dem Werkstück 1 vorgesehen sein. In diesem Fall befindet sich der Anlaufring 27 oberhalb des Werkzeuges 5' auf der Spindel 13.

Die gleiche Einrichtung kann auch am Werkzeug 4 vorgesehen sein.

Die Kehlmaschine stellt eine Universalmaschine dar, mit der durch einfache Verstellung der entsprechenden Werkzeuge die Werkstücke geradgehobelt, längsprofiliert, querprofiliert, umfräst oder konturgefräst werden können. Für die Querprofilierung wird der Transport der Werkstücke 1 in der beschriebenen Weise unterbrochen, so daß die entsprechenden Stirnseiten 20, 21 der Werkstücke 1 mit den Werkzeugen 4 bzw. 5 in der erforderlichen Weise querprofiliert, beispielsweise mit Zapfen und Schlitzen versehen werden können. Es ist auch möglich, das Anschlaglineal 11 schwenkbar auszubilden, so daß die Werkstücke unter einem Winkel schräg zur Transportrichtung 8 liegen. Dann ist auch eine Querbearbeitung unter entsprechenden Winkeln an den Werkstücken 1 möglich.

Sämtliche Verstellvorgänge, der Transport der Werkstücke sowie das Anhalten der Werkstücke werden über eine Steuerung automatisch vorgenommen. Es ist aber durchaus möglich, diese einzelnen Schritte handgesteuert durchzuführen.

Um die Stirnseiten 20, 21 des Werkstück 1 querprofilieren zu können, ist es selbstverständlich auch möglich, nicht das Werkzeug 4 bzw. 5 quer zur Transportrichtung 8 zu bewegen, sondern das entsprechende Werkstück. Es können auch das Werkzeug 4 bzw. 5 mit ihren Querschlitten 12, 14 und das Werkstück 2 quer zur Transportrichtung 8 während der Querprofilierung bewegbar sein. Wird das Werkstück 8 bei der Querprofilierung bewegt, wird es in geeigneter Weise gespannt und positioniert.

## Patentansprüche

1. Verfahren zur Bearbeitung von Werkstücken (1) aus Holz, Kunststoff und dergleichen auf einer Kehlmaschine, bei dem die Werkstücke (1) an drehbar angetriebenen, auf Spindeln (7, 9, 13, 15) sitzenden Werkzeugen (3 bis 6) auf einer Transportbahn (2) vorbeigeführt werden, von denen wenigstens ein um eine aufwärts gerichtete Achse drehbares Werkzeug (4, 5) eine Längsseite des Werkstückes (1) bearbeitet, wobei dieses Werkzeug (4, 5) auf einer Längsprofilierspindel (9, 13) sitzt, die quer zur Transportrichtung der Werkstücke (1) durch die Kehlmaschine verstellbar ist,
**dadurch gekennzeichnet, dass** zum Querprofilieren des Werkstückes (1) zumindest über einen Teil der Breite der zu profilierenden Seite (20, 21) auf der Kehlmaschine eine Relativverschiebung zwischen dieser verstellbaren Längsprofilierspindel (9, 13) und dem Werkstück (1) vorgenommen wird.

2. Verfahren nach Anspruch 1,
**dadurch gekennzeichnet, dass** das verstellbare Werkzeug (4, 5) zum Querprofilieren des Werkstückes (1) auf der Kehlmaschine zumindest über einen Teil der Breite der zu profilierenden Seite (20, 21) des Werkstückes (1) verstellt wird, wobei das Werkstück (1) bei der Querprofilierung angehalten wird.

3. Verfahren nach Anspruch 1 oder 2,
**dadurch gekennzeichnet, dass** nach der Querprofilierung das Werkstück (1) zurücktransportiert, gewendet und erneut dem verstellbaren Werkzeug (4, 5) zugeführt wird, und dass vorzugsweise das Werkstück (1) nach dem Wenden und erneuten Zuführen angehalten wird, dass anschließend das verstellbare Werkzeug (4, 5) zumindest über einen Teil der Breite der zu profilierenden Seite (21, 20) des Werkstückes (1) zur Querprofilierung verstellt wird, und dass das Werkstück (1) anschließend in Transportrichtung (8) weiter durch die Kehlmaschine transportiert wird.

4. Verfahren nach Anspruch 1 oder 2,
**dadurch gekennzeichnet, dass** das Werkstück (1) nach der Querprofilierung seiner einen Seite (20, 21) in Transportrichtung (8) weitertransportiert und nach einem vorgegebenen Transportweg angehalten wird, um mit dem Werkzeug (4, 5) oder einem anderen verstellbaren Werkzeug (5, 4) die andere Seite (21, 20) des Werkstückes (1) querzuprofilieren.

5. Verfahren nach Anspruch 1,
**dadurch gekennzeichnet, dass** zur Querprofilierung das Werkstück (1) relativ zum Werkzeug (4, 5) verstellbar ist, dessen Drehachse ortsfest angeordnet ist.

6. Verfahren nach Anspruch 1,
**dadurch gekennzeichnet, dass** zur Querprofilierung das Werkstück (1) und das Werkzeug (4, 5) verstellbar sind.

7. Verfahren nach einem der Ansprüche 1 bis 6,
**dadurch gekennzeichnet, dass** zum Umfräsen eines Rahmens (22) ein verstellbares Werkzeug (4, 5) abgenommen und mit einem anderen verstellbaren Werkzeug (5, 4) der Rahmen (22) bearbeitet wird.

8. Verfahren nach einem der Ansprüche 1 bis 6,
**dadurch gekennzeichnet, dass** zum Umfräsen eines Rahmens (22) zwei verstellbare Werkzeuge (4, 5) an eine Seite der Transportbahn (2) verstellt werden.

## Claims

1. Method for machining of workpieces (1) of wood, plastic or the like in a moulding machine, whereby the workpieces (1) are on a conveying trajectory (2) bypassed tools (3 to 6), rotatingly driven and being situated on spindles (7, 9, 13, 15) of which at least one tool (4, 5), rotatable around an upwards directed axis, machines a side wall of the workpiece (1), whereas the tool (4, 5) being situated on a longitudinal profiling spindle (9, 13), which is adjustable transversal to the transport direction of the workpieces (1) through the moulding machine,
**characterised in that** for transversal profiling of the workpiece (1), at least over a part of the width of the side (20, 21) to be profiled, a relative displacement on the moulding machine is executed between the adaptable longitudinal profiling spindle (9, 13) and the workpiece (1).

2. Method according to claim 1,
**characterised in that** the adaptable tool (4, 5) for the transversal profiling of the workpiece (1) on the moulding machine is displaced at least over a part of the width of the side (20, 21) to be profiled of the workpiece (1), whereas the workpiece (1) being stopped during the transversal profiling.

3. Method according to claim 1 or 2,
**characterised in that** the workpiece (1) after the transversal profiling is transported back, turned around and once more fed to the adaptable tool (4, 5) and that preferably the tool (1) is stopped after turning around and once more feeding, that subsequently the adaptable tool (4, 5) is displaced at least over a part of the width of the side (20, 21) to be profiled of the workpiece (1) for the transversal profiling and that the workpiece (1) subsequently is transported in the direction of transport (8) further through the moulding machine.

4. Method according to claim 1 or 2,
**characterised in that** the workpiece (1) after the transversal profiling of one of its sides (20, 21) is transported further in the direction of transport (8) and is stopped after a predetermined transport pathway for transversal profiling the other side (20, 21) of the workpiece (1) with the tool (4, 5) or another adaptable tool (5, 4).

5. Method according to claim 1,
**characterised in that**, for transversal profiling, the workpiece (1) is adjustable relatively to the tool (4, 5), whose rotational axis is disposed stationary.

6. Method according to claim 1,
**characterised in that** for transversal profiling, the workpiece (1) and the tool (4, 5) are adaptable.

7. Method according to one of the claims 1 to 6,
**characterised in that** for the milling of the perimeter of a frame (22) an adaptable tool (4, 5) is demounted and the frame (22) is machined with another adjustable tool (5, 4).

8. Method according to one of the claims 1 to 6,
**characterised in that** for the milling of the perimeter of a frame (22) two adaptable tools (4, 5) are displaced at one side of the transport pathway (2).

## Revendications

1. Procédé d'usinage des pièces (1) en bois, plastique ou similaires dans une moulurière, selon lequel les pièces (1), défilent sur une trajectoire de transport devant des outils (3 à 6) placés sur des broches (7, 9, 13, 15) et entrainés rotativement (2), dont au moins un outil (4, 5), étant rotatif autour d' un axe dirigé vers le haut, usine un côté longitudinal de la pièce (1), cet outil étant situé sur une broche de profilage longitudinale (9, 13), déplaçable transversalement par rapport à la direction de transport des pièces (1) à travers la moulurière, **caractérisé en ce que** pour le profilage transversal de la pièce (1), au moins sur un part de la largeur du côté (20, 21) à profiler, est procédé dans la moulurière un décalage relatif entre cette broche de profilage longitudinale (9, 13) déplaçable et la pièce (1).

2. Procédé selon revendication 1,
**caractérisé en ce que** l'outil ajustable (4, 5) est déplacé pour le profilage transversal de la pièce (1) dans la moulurière, au moins sur une partie de la largeur du côté (20, 21) à profiler, la pièce (1) étant arrêtée lors du profilage transversal.

3. Procédé selon revendication 1 ou 2,
**caractérisé en ce que**, après le profilage transversal, la pièce (1) est ramenée, renversée et à nouveau amenée à l'outil ajustable (4, 5), et que de préférence la pièce (1), après avoir été retournée et amenée à nouveau, est arrêtée, et qu' ensuite l'outil (4, 5) ajustable est déplacé pour le profilage transversal, au moins sur une partie de la largeur du côté (20, 21) à profiler de la pièce (1) et que la pièce (1) est transportée ensuite plus loin dans la direction de transport (8) à travers la moulurière.

4. Procédé selon revendication 1 ou 2,
**caractérisé en ce que** la pièce (1) après le profilage transversal de l'un de ses côtés (20, 21) est transportée plus loin dans la direction de transport (8) et qu'elle est arrêtée après un trajet de transport prédéterminé pour profiler transversalement l'autre côté (21, 20) de la pièce (1).avec l'outil (4, 5) ou un autre outil ajustable (5, 4).

5. Procédé selon revendication 1,
**caractérisé en ce que** pour le profilage transversal, la pièce (1) est ajustable relativement par rapport à l'outil (4, 5), dont l'axe de rotation est disposé de façon fixe.

6. Procédé selon revendication 1,
**caractérisé en ce que** pour le profilage transversal, la pièce (1) et l'outil (4, 5) sont ajustables.

7. Procédé selon une des revendications 1 à 6,
**caractérisé en ce que** pour le fraisage-détourage d'un cadre (22), un outil ajustable (4, 5) est détaché et que le cadre (22) est usiné avec un autre outil (5, 4).

8. Procédé selon une des revendications 1 à 6,
**caractérisé en ce que** pour le fraisage-détourage d'un cadre (22), deux outils (4, 5) ajustables sont déplacés sur un côté de la trajectoire de transport (2).
